# EUROPEAN PATENT SPECIFICATION

(11) **EP 2 760 229 B1**
(45) Date of publication and mention of the grant of the patent: **18.10.2017**
(21) Application number: 11865061.3
(22) Date of filing: 23.12.2011
(51) Int. Cl.: H04W 4/12, H04W 28/02

(54) **TRIGGER MESSAGE SENDING METHOD AND SYSTEM**
AUSLÖSERVERFAHREN UND SYSTEM ZUM SENDEN VON NACHRICHTEN
PROCÉDÉ ET SYSTÈME D'ENVOI DE MESSAGE DE DÉCLENCHEMENT

(30) Priority: 23.09.2011 CN 201110286633
(43) Date of publication of application: 30.07.2014
(73) Proprietor: ZTE Corporation, Shenzhen, Guangdong 518057 (CN)
(72) Inventor: WU, Hao, Shenzhen Guangdong 518057 (CN)
(74) Representative: Novagraaf Technologies
(86) International application number: PCT/CN2011/084508
(87) International publication number: WO 2012/152017

(56) References cited:
- WO-A1-2010/105677
- CN-A- 1 852 301
- CN-A- 101 730 033
- CN-A- 102 090 105
- HTC: "Solution of Suppressing Device Trigger", 3GPP DRAFT; S2-113217WASS2-112259_SUPRESSTRIGGER-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548527, [retrieved on 2011-07-05]

## Description

### Field of the Invention

The present invention relates to the field of Machine Type Communication (MTC) terminal management, and in particular to a method and a system for sending a trigger message.

### Background of the Invention

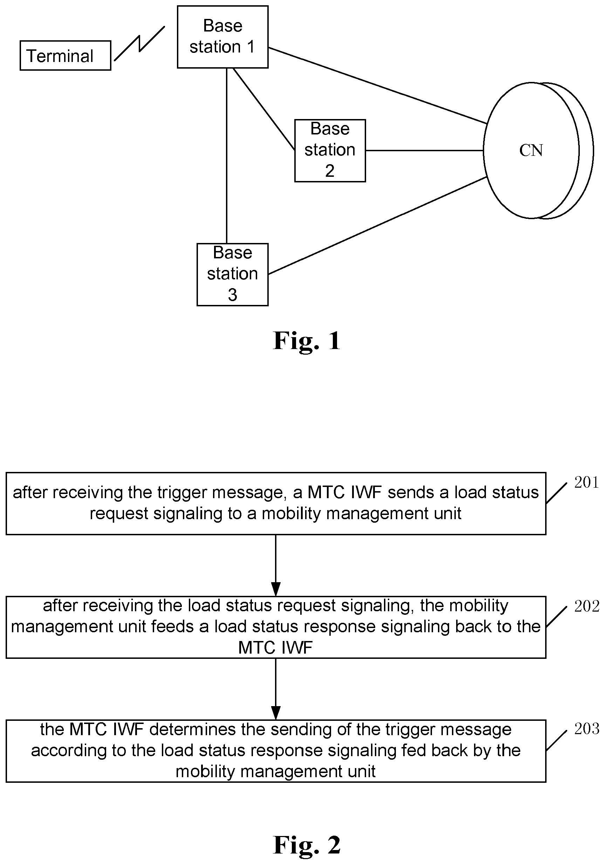

A cellular wireless communication system is mainly composed of a Core Network (CN), a Radio Access Network (RAN) and terminals. In the above, the CN is responsible for the Non-Access Stratum (NAS) tasks, such as the terminal location update etc., and the CN is an anchor of user plane. The RAN includes base stations, or includes base stations and base station controllers, and the RAN is responsible for the access layer tasks, such as the radio resource management. There may be physical or logical connection between the base stations according to the actual situation. As shown in Fig. 1, the base station 1 is connected to the base station 2 or the base station 3, and each base station may be connected to one or more than one CN node. The terminal, namely the User Equipment (UE), means equipment capable of communicating with the cellular wireless communication network, such as a mobile phone or a laptop.

A mobility management unit, for example, a Mobility Management Entity (MME) or a Serving GPRS Support Node (SGSN), is the unit, in the CN, for managing terminal access control, location information update and switching, and is responsible for controlling the NAS signaling from the CN to the terminal and registering the terminal to the network.

A Home Subscriber Server (HSS) or a Home Location Register (HLR) is the entity, in the CN, for saving the identity information, the authentication information, the authorization information and the like of terminal equipment. On the basis of different conditions, the HSS or the HLR can be configured to save the identity information of user and the binding information between the user and the terminal equipment, or only save the identity information of the user (the binding information between the user and the terminal equipment can be saved by the network administrator), or directly save the identity information of the terminal equipment. The HSS or the HLR is also responsible for a subscriber data base of the user and performing the authentication, the authorization and the like of the user. A service platform can query information of the user or the information of the terminal from the HSS or the HLR.

An MTC Inter-Working Function (MTC IWF) is a connection entity between a mobile communication network and an external public network. The MTC IWF can implement the functions of converting protocol, querying address, saving information and so on. The MTC IWF is externally connected to an application server, and may be internally connected to the HSS/HLR, or the MME/SGSN.

Usually, some services, for example, a monitoring and management system needs to obtain the monitoring data from a monitoring terminal, require triggering through a server the terminal to establish connection with the server, so as to report the needed data. After receiving a trigger message from the server, the terminal needs to be able to respond immediately to establish connection with the server. At present, for meeting the requirement from the server to trigger the terminal, the traditional solution includes the following steps. A trigger message is sent to a HSS or a HLR through a server. A serving MME or a serving SGSN of a terminal is queried through the HSS or the HLR. The trigger message is sent to the MME or the SGSN, and then the trigger message is sent to the terminal through the NAS signaling. The terminal establishes the connection with the server according to the trigger message.

However, the sending of the trigger message in the tradition art does not take the load status of the current network into consideration. Especially in occurrence of network congestion, the sending of the trigger message is bound to worsen the network congestion, which results in adverse effect on the normal operation of network.

The document HTC: "Solution of Suppressing Device Trigger", 3GPP DRAFT; S2-113217WASS2-112259_SUPPRESSTRIGGER-V3, 5 July 2011, XP050548527 provides two technical solutions for suppressing device trigger, however, the above mentioned problem still remains unsolved.

### Summary of the Invention

In view of this, the present invention is to provide a method as defined in claim 1 and a system as defined in claim 6 for sending a trigger message, which can send the trigger message according to the network status. Further preferred embodiments are defined in the dependent claims. The present invention acquires the load status of the network through the information interaction between the MTC IWF and the mobility management unit, and further realizes that the MTC IWF can send the trigger message according to the load status of the network, and can control the sending of the trigger message well, especially in network congestion, thereby preventing the network congestion from worsening.

### Brief Description of the Drawings

Fig. 1 is a schematic diagram of structure of the cellular wireless communication system according to the traditional art;
Fig. 2 is an implementation flowchart of a method for sending a trigger message according to the present invention;
Fig. 3 is an implementation flowchart of a method for sending a trigger message according to embodiment 1 of the present invention;
Fig. 4 is an implementation flowchart of a method for sending a trigger message according to embodiment 2 of the present invention;
Fig. 5 is an implementation flowchart of a method for sending a trigger message according to embodiment 3 of the present invention; and
Fig. 6 is a schematic diagram of structure of a system for sending a trigger message according to the present invention.

### Detailed Description of the Embodiments

The present invention is that: after receiving a trigger message, an MTC IWF sends a load status request signaling to a mobility management unit. The mobility management unit feeds a load status response signaling back to the MTC IWF according to the load status request signaling which is received. The MTC IWF determines the sending of the trigger message according to the load status response signaling fed back by the mobility management unit.

For making the object, the technical solution and the advantages of the present invention more clear, the present invention is described below with reference to the accompanying drawings and embodiments in detail.

Fig. 2 is an implementation flow of a method for sending a trigger message according to the present invention, as shown in Fig. 2, the method includes the following steps.

Step 201, after receiving the trigger message, an MTC IWF sends a load status request signaling to a mobility management unit.

Here, the mobility management unit is an MME or a SGSN.

Before this step, the method further includes that: an MTC application server sends the trigger message to an MTC IWF, wherein the trigger message contains a terminal identity and a valid time.

It should be understood that this step further includes that: the MTC IWF saves the trigger message, sets and starts a timer according to the valid time in the trigger message.

Specifically, the trigger message may contain a terminal identity, a valid time, an address of the server, an application identity and so on. The MTC IWF sets and starts the timer according to the valid time in the trigger message, wherein the valid time is for indicating the valid length of time of the trigger message.

Here, when there is a direct interface existing between the MTC IWF and the mobility management unit, the load status request signaling may be directly sent to the mobility management unit. Specifically, the MTC IWF queries the mobility management unit serving the terminal according to the terminal identity in the trigger message, and directly sends the load status request signaling to the mobility management unit.

When there is no direct interface existing between the MTC IWF and the mobility management unit, the load status request signaling may be forwarded to the mobility management unit through the HSS or the HLR. Specifically, the MTC IWF searches the HSS or the HLR where the terminal is located according to the terminal identity in the trigger message, and sends the load status request signaling to the mobility management unit through the HSS or the HLR.

Step 202, after receiving the load status request signaling, the mobility management unit feeds a load status response signaling back to the MTC IWF.

Here, the mobility management unit indicates the load status of the current network through the load status response signaling. The load status response signaling may contain a load factor, or the load factor and a wait time according to the presetting, wherein the load factor is for indicating the load status of the network.

Step 203, the MTC IWF determines the sending of the trigger message according to the load status response signaling fed back by the mobility management unit.

Here, the MTC IWF determines the sending mode of the trigger message according to the content included in the load status response signaling.

When the load status response signaling includes the load factor, and the load factor indicates that the current network is in congestion state, the MTC IWF deletes the trigger message, or reports the failure of triggering to the MTC application server, or sends the trigger message to the terminal in the short message trigger/cell broadcast mode. When the load factor indicates that the current network is not in congestion state, the MTC IWF sends the trigger message to the mobility management unit.

When the load status response signaling includes the load factor and the wait time, and the load factor indicates that the current network is in congestion state, and the wait time is more than the valid time of the trigger message, the MTC IWF deletes the trigger message, or reports the failure of triggering to the MTC application server, or sends the trigger message to the terminal in the short message trigger/cell broadcast mode. When the load factor indicates that the current network is in congestion state, and the wait time is less than the valid time of the trigger message, the MTC IWF sends the trigger message to the mobility management unit after the wait time is up. When the load factor indicates that the current network is not in congestion state, the MTC IWF sends the trigger message to the mobility management unit.

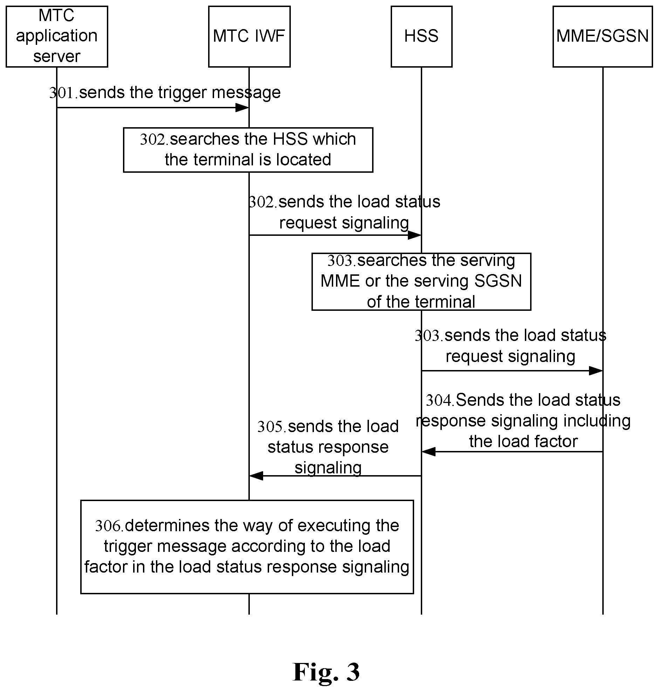

Fig. 3 is an implementation flowchart of a method for sending a trigger message according to embodiment 1 of the present invention. In the present embodiment, an MTC IWF sends a load status request signaling to a mobility management unit through a HSS. A load status response signaling includes a load factor. As shown in Fig. 3, the embodiment 1 includes the following steps.

Step 301, when needing to obtain real-time data from a terminal, an MTC application server sends the trigger message to the MTC IWF.

In the above, the trigger message includes a terminal identity, a valid time, an address of the server, an application identity and so on, wherein the terminal identity is an external identity used outside the network.

Step 302, the MTC IWF parses the trigger message which is received, searches the HSS which the terminal is located, and sends the load status request signaling to the HSS after finding the HSS which the terminal is located.

Specifically, a local database of the MTC IWF stores a mapping table of one-to-one correspondence between an external identity and an internal identity, and a mapping table of many-to-one correspondence between the internal identity and the HSS.

The MTC IWF reads the terminal identity in the trigger message, searches an internal identity used in the network that the terminal identity in the trigger message corresponds to according to the mapping table one-to-one correspondence between the external identity and the internal identity in the locally stored database, and searches, in the mapping table of many-to-one correspondence between the internal identity and the HSS in the database, the HSS where the terminal is according to the internal identity.

In addition, it should be understood that this step further includes that: the MTC IWF saves the trigger message, locally sets a value of a timer T according to the valid time in the trigger message, and starts the timer T.

Step 303, after receiving the trigger message, the HSS searches the serving MME or the serving SGSN of the terminal, and sends the load status request signaling to the MME or SGSN.

Specifically, after the terminal is registered to the network, the HSS saves an identity or address of the current serving MME or the current serving SGSN of the terminal, and searches, in the locally saved information, the identity or address of the serving MME or the serving SGSN of the terminal according to the terminal identity in the trigger message.

Step 304, after receiving the load status request signaling, the MME or the SGSN sets the value of the load factor, and sends the load status response signaling to the HSS, wherein the load status response signaling includes the load factor.

Here, the way of setting the value of the load factor, which is adopted by the present embodiment, is that: if the current network is in congestion or overload state, the MME or the SGSN sets the value of the load factor to 1, which means the current network is in congestion or overload state. If the current network is normal, the MME or the SGSN sets the value of the load factor to 0. It should be understood that the setting way above can also be contrary, that is, if the value of the load factor is 1, it means the current network is normal; if the value of the load factor is 0, it means the current network is in congestion or overload state.

In the above, the way of determining the congestion or overload state of the network is: a load threshold value is preset locally in the MME or the SGSN. If the load value of the current network exceeds the load threshold value, the current network is in congestion or overload state.

Step 305, the HSS sends the load status response signaling to the MTC IWF.

Step 306, after receiving the load status response signaling, the MTC IWF determines the way of executing the trigger message according to the load factor.

Specifically, if the value of the load factor is 1, it means the current network is in congestion or overload state, and then the MTC IWF deletes the trigger message, or reports to the MTC application server which sends the trigger message, and indicates in a report that triggering is failed because of the congestion or overload of the network. After receiving the report, the MTC application server no longer sends the trigger message to the MTC IWF. Furthermore, when the MTC IWF supports the short message trigger mode or the cell broadcast mode, the trigger message may also be sent to a short message center or a cell broadcast center, and then the trigger message is sent to the terminal by the short message center in the short message mode or by the cell broadcast center in the broadcast mode.

If the value of the load factor is 0, it means the current network is not in congestion or overload state, and then the MTC IWF sends the trigger message to the MME or the SGSN.

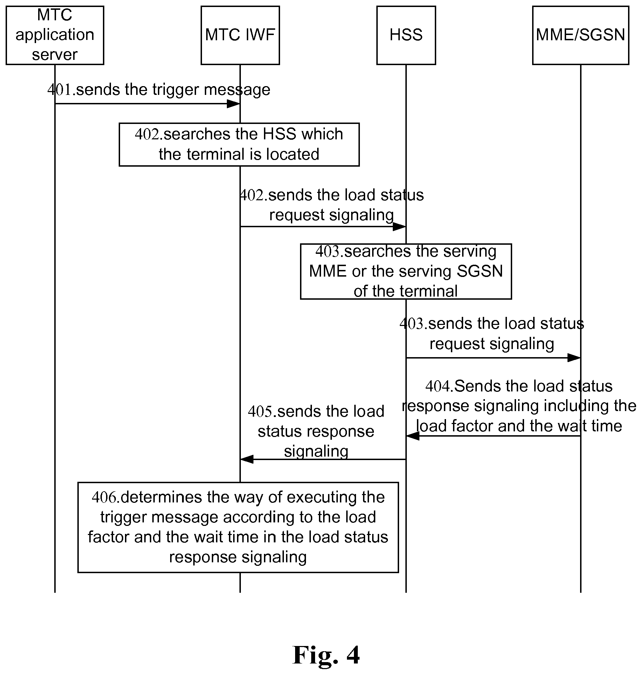

Fig. 4 is an implementation flowchart of a method for sending a trigger message according to embodiment 2 of the present invention. In the present embodiment, an MTC IWF sends a load status request signaling to a mobility management unit through a HSS, wherein the load status response signaling includes a load factor and a wait time. As shown in Fig. 4, the present embodiment 2 includes the following steps.

Step 401, when needing to obtain real-time data from a terminal, an MTC application server sends the trigger message to the MTC IWF.

In the above, the trigger message includes a terminal identity, a valid time, an address of the server, an application identity and so on, wherein the terminal identity is an external identity used outside the network.

Step 402, the MTC IWF parses the trigger message which is received, searches the HSS where the terminal is, and sends the load status request signaling to the HSS after finding the HSS where the terminal is.

Specifically, a local database of the MTC IWF stores a mapping table of one-to-one correspondence between an external identity and an internal identity, and a mapping table of many-to-one correspondence between the internal identity and the HSS.

The MTC IWF reads the terminal identity in the trigger message, searches an internal identity used in the network that the terminal identity in the trigger message corresponds to according to the mapping table of one-to-one correspondence between the external identity and the internal identity in the locally stored database, and searches, in the mapping table of many-to-one correspondence between the internal identity and the HSS in the database, the HSS where the terminal is according to the internal identity.

In addition, it should be understood that this step further includes that: the MTC IWF saves the trigger message, locally sets the value of a timer T according to the valid time in the trigger message, and starts the timer T.

Step 403, after receiving the trigger message, the HSS searches the serving MME or the serving SGSN of the terminal, and sends the load status request signaling to the MME or SGSN.

Specifically, after the terminal is registered to the network, the HSS saves an identity or address of the current serving MME or the current serving SGSN of the terminal, and searches, in the locally stored information, the identity or address of the serving MME or the serving SGSN of the terminal according to the terminal identity in the trigger message.

Step 404, after receiving the load status request signaling, the MME or the SGSN sets a value of the load factor and a value of the wait time, and send the load status response signaling to the HSS, wherein the load status response signaling includes the load factor and the wait time.

Here, the way of setting the value of the load factor, which is adopted by the embodiment, is that: if the current network is in congestion or overload state, the MME or the SGSN sets the value of the load factor to 1, which means the current network is in congestion or overload state. If the current network is normal, the MME or the SGSN sets the value of the load factor to 0. It should be understood that the setting way above can also be contrary, that is, if the value of the load factor is 1, it means the current network is normal; if the value of the load factor is 0, it means the current network is in congestion or overload state.

In the above, the way of determining the congestion or overload state of the network is that: a load threshold value is preset locally in the MME or the SGSN. If a load value of the current network exceeds the load threshold value, it is determined that the current network is in congestion or overload state.

The way of setting the value of the wait time is that: the network predicts the time needed for relieving the congestion or overload of network according to the previous statistical data of network operation, and then sets the wait time as the time value of the needed time.

Step 405, the HSS sends the load status response signaling to the MTC IWF.

Step 406, after receiving the load status response signaling, the MTC IWF determines the way of executing the trigger message according to the load factor and the wait time.

Specifically, if the value of the load factor is 1, the value of the wait time is read, and the value of the wait time and the value of the current timer T are compared. If the value of the wait time is more than the value of the current timer T, the MTC IWF deletes the trigger message, or reports to an MTC application server which sends the trigger message, and indicates in a report that the triggering is failed because of the congestion or overload of the network. After receiving the report, the MTC application server no longer sends the trigger message to the MTC IWF. Furthermore, when the MTC IWF supports a short message trigger mode or a cell broadcast mode, the trigger message may also be sent to a short message center or a cell broadcast center. Then the trigger message is sent to the terminal by the short message center in the short message mode or by the cell broadcast center in the broadcast mode. When the value of the wait time is less than the value of the current timer T, the value of the Twait_time of the timer is set as the value of the wait time. The trigger message is sent to the MME or the SGSN after the Twait_time is up.

If the value of the load factor is 0, it means the current network is not in congestion or overload state, and then the MTC IWF sends the trigger message to the MME or the SGSN.

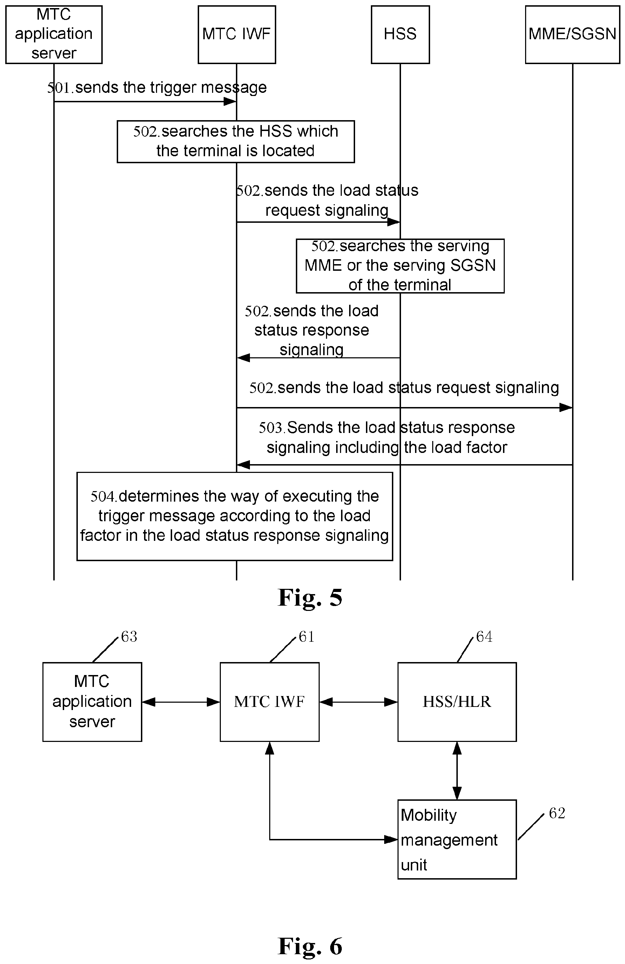

Fig. 5 shows an implementation flow of the embodiment 3 of a method for sending a trigger message according to the present invention. In the present embodiment, an MTC IWF directly sends a load status request signaling to a mobility management unit, wherein the load status response signaling includes a load factor. As shown in Fig. 5, the embodiment 3 includes the following steps.

Step 501, when needing to obtain real-time data from a terminal, an MTC application server sends the trigger message to the MTC IWF.

In the above, the trigger message includes a terminal identity, a valid time, an address of the server, an application identity and so on, wherein the terminal identity is an external identity used outside a network.

Step 502, the MTC IWF parses the trigger message which is received, searches the HSS where the terminal is, obtains the serving MME or the serving SGSN of the terminal by querying through the HSS, and directly sends the load status request signaling to the MME or the SGSN.

Specifically, a local database of the MTC IWF stores a mapping table of one-to-one correspondence between an external identity and an internal identity, and a mapping table of many-to-one correspondence between the internal identity and the HSS.

The MTC IWF reads the terminal identity in the trigger message, searches an internal identity used in the network that the terminal identity in the trigger message corresponds to according to the mapping table of one-to-one correspondence between an external identity and an internal identity in the locally stored database, and searches, in the mapping table of many-to-one correspondence between the internal identity and the HSS in the database, the HSS where the terminal is according to the internal identity.

After the terminal is registered to the network, the HSS saves an identity or address of the current serving MME or the current serving SGSN of the terminal.

After finding the HSS where the terminal is, the MTC IWF sends a query request signaling to the HSS to request the HSS to query the serving MME or the serving SGSN of the terminal, wherein the query request signaling includes the terminal identity. After receiving the query request signaling, the HSS queries the identity or address of the serving MME or the serving SGSN of the terminal according to the terminal identity in the signaling, and sends a query response signaling to the MTC IWF, wherein the query response signaling includes the query result and the corresponding terminal identity.

The MTC IWF reads the identity and address of the MME or the SGSN in the query response signaling, and directly sends the load status request signaling to the MME or the SGSN.

Step 503, after receiving the load status request signaling, the MME or the SGSN sets a value of the load factor, and sends the load status response signaling to the MTC IWF, wherein the load status response signaling includes the load factor.

Here, the way of setting the value of the load factor, which is adopted by the embodiment, is that: if the current network is in congestion or overload state, the MME or the SGSN sets the value of the load factor to 1, which means the current network is in congestion or overload state. If the current network is normal, the MME or the SGSN sets the value of the load factor to 0. It should be understood that the setting way above can also be contrary, that is, if the value of the load factor is 1, it means the current network is normal; if the value of the load factor is 0, it means the current network is in congestion or overload state.

In the above, the way of determining the congestion or overload state of the network is that: a load threshold value is set locally in the MME or the SGSN. If a load value of the current network exceeds the load threshold value, it is determined that the current network is in congestion or overload state.

Step 504, after receiving the load status response signaling, the MTC IWF determines the way of executing the trigger message according to the load factor.

Specifically, if the value of the load factor is 1, it means the current network is in congestion or overload state, and then the MTC IWF deletes the trigger message, or reports to the MTC application server which sends the trigger message, and indicates in a report that the triggering is failed because of the congestion or overload of the network. After receiving the report, the MTC application server no longer sends the trigger message to the MTC IWF. Furthermore, when the MTC IWF supports the short message trigger mode or the cell broadcast mode, the trigger message can also be sent to a short message center or a cell broadcast center. Then the trigger message is sent to the terminal by the short message center in the short message mode or by the cell broadcast center in the broadcast mode.

If the value of the load factor is 0, it means the current network is not in congestion or overload state, and then the MTC IWF sends the trigger message to the MME or the SGSN.

Fig. 6 shows a structure of a system for sending a trigger message according to the present invention. As shown in Fig. 6, the system includes an MTC IWF 61 and a mobility management unit 62.

In the above, the MTC IWF 61 is configured to send a load status request signaling to the mobility management unit 62 after receiving the trigger message, and determine the sending of the trigger message according to the load status response signaling fed back by the mobility management unit 62.

The mobility management unit 62 may be specifically the MME or the SGSN, and is configured to feed back the load status response signaling according to the load status request signaling which is received.

The system further includes an MTC application server 63 which is configured to send the trigger message including a terminal identity and a valid time to the MTC IWF 61, wherein the trigger message may also include an address of the server, an application identity and so on.

In the above, the MTC IWF 61 is further configured to store the trigger message, locally set a value of a timer T according to the valid time in the trigger message, and start the timer T.

The system further includes the HSS/HLR 64.

The MTC IWF 61 is specifically configured to directly send the load status request signaling to the mobility management unit 62. When there is a direct interface existing between the MTC IWF 61 and the mobility management unit 62, the load status request signaling may be directly sent to the mobility management unit 62. Specifically, the MTC IWF 61 queries the mobility management unit 62 serving the terminal according to the terminal identity in the trigger message, and directly sends the load status request signaling to the mobility management unit 62.
or, the load status request signaling is sent to the mobility management unit 62 through the HSS/HLR 64. Specifically, when there is no direct interface existing between the MTC IWF 61 and the mobility management unit 62, the load status request signaling may be forwarded to the mobility management unit 62 through the HSS/HLR 64. Specifically, the MTC IWF 61 finds the HSS/HLR 64 where the terminal is according to the terminal identity in the trigger message, and sends the load status request signaling to the mobility management unit 62 through the HSS/HLR 64.

Furthermore, the load status response signaling may include a load factor, and may also include the load factor and a wait time. The MTC IWF 61 determines the way of sending the trigger message according to the content included in the load status response signaling.

The MTC IWF 61 is specifically configured to delete the trigger message, or report the failure of triggering to the MTC application server 63, or send the trigger message in the short message trigger/cell broadcast mode, when the load status response signaling is received, wherein the load status response signaling includes the load factor, and the load factor indicates that the current network is in congestion state. The MTC IWF 61 is specifically configured to send the trigger message to the mobility management unit 62, when the load factor indicates that the current network is not in congestion state.

Furthermore, the MTC IWF 61 is specifically configured to delete the trigger message, or report the failure of triggering to the MTC application server 63, or send the trigger message to the terminal in the short message trigger/cell broadcast mode, when the load status response signaling is received, wherein the load status response signaling includes the load factor and the wait time, and the load factor indicates that the current network is in congestion state, and the wait time is more than the current valid time of the trigger message. The MTC IWF is specifically configured to send the trigger message to the mobility management unit 62 after the wait time is up, when the load factor indicates that the current network is in congestion state, and the wait time is less than the current valid time of the trigger message. The MTC IWF is specifically configured to send the trigger message to the mobility management unit 62, when the load factor indicates that the current network is not in congestion state.

The above is only the better embodiment of the present invention, and not intended to limit the scope of the claims of the present invention.

## Claims

1. A method for sending a trigger message, comprising:
after receiving a trigger message, a Machine Type Communication Inter-Working Function, MTC IWF, sending (201) a load status request signaling to a mobility management unit;
after receiving the load status request signaling, the mobility management unit feeding (202) a load status response signaling back to the MTC IWF; and
the MTC IWF determining (203) the sending of the trigger message according to the load status response signaling fed back by the mobility management unit;
wherein when the load status response signaling comprises a load factor, the MTC IWF determining (203) the sending of the trigger message according to the load status response signaling fed back by the mobility management unit comprises:
when the load factor indicates that a current network is in a congestion state, the MTC IWF (306, 504) sending the trigger message to a terminal by a mode of short message trigger or cell broadcast.

2. The method according to claim 1, **characterized by** further comprising:
an MTC application server sending (501) the trigger message to the MTC IWF, wherein the trigger message comprises a terminal identity and a valid time; and
the MTC IWF saving the trigger message, setting and starting a timer according to the valid time.

3. The method according to claim 1, **characterized in that** the MTC IWF sending (201) the load status request signaling to the mobility management unit comprises:
the MTC IWF directly sending (502) the load status request signaling to the mobility management unit; or,
the MTC IWF sending (302, 303, 402, 403) the load status request signaling to the mobility management unit through a Home Subscriber Server, HSS, or a Home Location Register, HLR.

4. The method according to any one of claims 1 to 3, **characterized in that** the MTC IWF determining (203) the sending of the trigger message according to the load status response signaling fed back by the mobility management unit further comprises:
when the load factor indicates that the current network is not in the congestion state, the MTC IWF sending (306, 504) the trigger message to the mobility management unit.

5. The method according to any one of claims 1 to 3, **characterized in that** when the load status response signaling further comprises a waiting time, the MTC IWF determining (203) the sending of the trigger message according to the load status response signaling fed back by the mobility management unit comprises:
when the load factor indicates that the current network is in the congestion state, and the waiting time is more than the current valid time of the trigger message, the MTC IWF (406) sending the trigger message to the terminal by the mode of the short message trigger or cell broadcast; or,
when the load factor indicates that the current network is in the congestion state, and the waiting time is less than the current valid time of the trigger message, the MTC IWF sending (406) the trigger message to the mobility management unit after the waiting time is up; or,
when the load factor indicates that the current network is not in the congestion state, the MTC IWF sending (406) the trigger message to the mobility management unit.

6. A system for sending a trigger message, where the system comprises a Machine Type Communication Inter-Working Function, MTC IWF, (61) and a mobility management unit (62), wherein
the MTC IWF (61) is configured to send a load status request signaling to the mobility management unit (62) after receiving a trigger message, and determine the sending of the trigger message according to the load status response signaling fed back by the mobility management unit (62); and
the mobility management unit (62) is configured to feed back the load status response signaling according to the load status request signaling which is received;
wherein the MTC IWF (61) is configured to send the trigger message by a mode of short message trigger or cell broadcast, when the received load status response signaling comprises a load factor, and the load factor indicates that a current network is in a congestion state.

7. The system according to claim 6, **characterized by** further comprising: an MTC application server (63), configured to send the trigger message to the MTC IWF (61), wherein the trigger message comprises a terminal identity and a valid time; and
the MTC IWF (61), further configured to save the trigger message, set and start a timer according to the valid time in the trigger message.

8. The system according to claim 6, **characterized in that** the system further comprises a Home Subscriber Server, HSS, or a Home Location Register, HLR, (64); the MTC IWF (61) is configured to directly send the load status request signaling to the mobility management unit (62), or send the load status request signaling to the mobility management unit (62) through the HSS or the HLR (64).

9. The system according to any one of claims 6 to 8, **characterized in that** the MTC IWF (61) is further configured to send the trigger message to the mobility management unit (62), when the load factor indicates that the current network is not in the congestion state.

10. The system according to any one of claims 6 to 8, **characterized in that** the MTC IWF (61) is configured to send the trigger message to a terminal by the mode of the short message trigger or cell broadcast, when the received load status response signaling further comprises a waiting time, and when the load factor indicates that the current network is in the congestion state, and the waiting time is more than the current valid time of the trigger message; the MTC IWF (61) is configured to send the trigger message to the mobility management unit (62) after the waiting time is up, when the load factor indicates that the current network is in the congestion state, and the waiting time is less than the current valid time of the trigger message; the MTC IWF (61) is configured to send the trigger message to the mobility management unit (62), when the load factor indicates that the current network is not in the congestion state.

## Patentansprüche

1. Verfahren zum Senden einer Trigger-Nachricht, umfassend:
nach Empfangen einer Trigger-Nachricht, Senden (201), durch eine Machine Type Communication Interworking-Funktion, MTC IWF, einer Auslastungsstatusanfrage-Signalisierung an eine Mobilitätsverwaltungseinheit;
nach Empfangen der Auslastungsstatusanfrage-Signalisierung, Zurückgeben (202), durch die Mobilitätsverwaltungseinheit, einer Auslastungsstatusantwort-Signalisierung an die MTC IWF; und
Bestimmen (203), durch die MTC IWF, des Sendens der Trigger-Nachricht gemäß der durch die Mobilitätsverwaltungseinheit zurückgegebenen Auslastungsstatusantwort-Signalisierung;
wobei, wenn die Auslastungsstatusantwort-Signalisierung einen Auslastungsfaktor umfasst, das Bestimmen (203), durch die MTC IWF, des Sendens der Trigger-Nachricht gemäß der durch die Mobilitätsverwaltungseinheit zurückgegebenen Auslastungsstatusantwort-Signalisierung umfasst:
wenn der Auslastungsfaktor anzeigt, dass sich ein aktuelles Netzwerk in einem Überlastungszustand befindet, Senden der Trigger-Nachricht durch die MTC IWF (306, 504) an ein Endgerät über einen Kurznachrichten-Trigger- oder Zellenrundfunk-Modus.

2. Verfahren nach Anspruch 1, **dadurch gekennzeichnet, dass** es weiter umfasst:
Senden (501), durch einen MTC-Anwendungsserver, der Trigger-Nachricht an die MTC IWF, wobei die Trigger-Nachricht eine Endgeräte-Identität und eine Gültigkeitsdauer umfasst; und
Speichern der Trigger-Nachricht, Einstellen und Starten eines Timers gemäß der Gültigkeitsdauer durch die MTC IWF.

3. Verfahren nach Anspruch 1, **dadurch gekennzeichnet, dass** das Senden (201) der Auslastungsstatusanfrage-Signalisierung durch die MTC IWF an die Mobilitätsverwaltungseinheit umfasst:
direktes Senden (502) der Auslastungsstatusanfrage-Signalisierung durch die MTC IWF an die Mobilitätsverwaltungseinheit; oder
Senden (302, 303, 402, 403) der Auslastungsstatusanfrage-Signalisierung durch die MTC IWF an die Mobilitätsverwaltungseinheit über einen Home Subscriber Server, HSS, oder ein Home Location Register, HLR.

4. Verfahren nach einem der Ansprüche 1 bis 3, **dadurch gekennzeichnet, dass** das Bestimmen (203), durch die MTC IWF, des Sendens der Trigger-Nachricht gemäß der durch die Mobilitätsverwaltungseinheit zurückgegebenen Auslastungsstatusantwort-Signalisierung weiter umfasst:
wenn der Auslastungsfaktor anzeigt, dass sich das aktuelle Netzwerk nicht im Überlastungszustand befindet, Senden (306, 504) der Trigger-Nachricht durch die MTC IWF an die Mobilitätsverwaltungseinheit.

5. Verfahren nach einem der Ansprüche 1 bis 3, **dadurch gekennzeichnet, dass** wenn die Auslastungsstatusantwort-Signalisierung weiter eine Wartedauer umfasst, das Bestimmen (203), durch die MTC IWF, des Sendens der Trigger-Nachricht gemäß der durch die Mobilitätsverwaltungseinheit zurückgegebenen Auslastungsstatusantwort-Signalisierung umfasst:
wenn der Auslastungsfaktor anzeigt, dass sich das aktuelle Netzwerk im Überlastungszustand befindet, und die Wartedauer länger als die aktuelle Gültigkeitsdauer der Trigger-Nachricht ist, Senden, durch die MTC IWF (406), der Trigger-Nachricht an das Endgerät über den Kurznachrichten-Trigger- oder Zellenrundfunk-Modus; oder
wenn der Auslastungsfaktor anzeigt, dass sich das aktuelle Netzwerk im Überlastungszustand befindet und die Wartedauer kürzer als die aktuelle Gültigkeitsdauer der Trigger-Nachricht ist, Senden (406), durch die MTC IWF, der Trigger-Nachricht an die Mobilitätsverwaltungseinheit, nachdem die Wartedauer verstrichen ist; oder
wenn der Auslastungsfaktor anzeigt, dass sich das aktuelle Netzwerk nicht im Überlastungszustand befindet, Senden (406) der Trigger-Nachricht durch die MTC IWF an die Mobilitätsverwaltungseinheit.

6. System zum Senden einer Trigger-Nachricht, wobei das System eine Machine Type Communication Interworking-Funktion, MTC IWF, (61) und eine Mobilitätsverwaltungseinheit (62) umfasst, wobei
die MTC IWF (61) dazu eingerichtet ist, nach Empfangen einer Trigger-Nachricht eine Auslastungsstatusanfrage-Signalisierung an die Mobilitätsverwaltungseinheit (62) zu senden und das Senden der Trigger-Nachricht gemäß der durch die Mobilitätsverwaltungseinheit (62) zurückgegebenen Auslastungsstatusantwort-Signalisierung zu bestimmen; und
die Mobilitätsverwaltungseinheit (62) dazu eingerichtet ist, die Auslastungsstatusantwort-Signalisierung gemäß der Auslastungsstatusanfrage-Signalisierung, die empfangen wird, zurückzugeben;
wobei die MTC IWF (61) dazu eingerichtet ist, die Trigger-Nachricht über einen Kurznachrichten-Trigger-oder Zellenrundfunk-Modus zu senden, wenn die empfangene Auslastungsstatusantwort-Signalisierung einen Auslastungsfaktor umfasst, und der Auslastungsfaktor anzeigt, dass sich ein aktuelles Netzwerk in einem Überlastungszustand befindet.

7. System nach Anspruch 6, **dadurch gekennzeichnet, dass** es weiter umfasst: einen MTC-Anwendungsserver (63), der dazu eingerichtet ist, die Trigger-Nachricht an die MTC IWF (61) zu senden, wobei die Trigger-Nachricht eine Endgeräte-Identität und eine Gültigkeitsdauer umfasst; und
die MTC IWF (61), die weiter dazu eingerichtet ist, die Trigger-Nachricht zu speichern, einen Timer gemäß der Gültigkeitsdauer in der Trigger-Nachricht einzustellen, und zu starten.

8. System nach Anspruch 6, **dadurch gekennzeichnet, dass** das System weiter einen Home Subscriber Server, HSS, oder ein Home Location Register, HLR, (64) umfasst;
die MTC IWF (61) dazu eingerichtet ist, die Auslastungsstatusanfrage-Signalisierung direkt an die Mobilitätsverwaltungseinheit (62) zu senden, oder die Auslastungsstatusanfrage-Signalisierung über den HSS oder das HLR (64) an die Mobilitätsverwaltungseinheit (62) zu senden.

9. System nach einem der Ansprüche 6 bis 8, **dadurch gekennzeichnet, dass** die MTC IWF (61) weiter dazu eingerichtet ist, die Trigger-Nachricht an die Mobilitätsverwaltungseinheit (62) zu senden, wenn der Auslastungsfaktor anzeigt, dass sich das aktuelle Netzwerk nicht im Überlastungszustand befindet.

10. System nach einem der Ansprüche 6 bis 8, **dadurch gekennzeichnet, dass** die MTC IWF (61) dazu eingerichtet ist, die Trigger-Nachricht über den Kurznachrichten-Trigger- oder Zellenrundfunk-Modus an ein Endgerät zu senden, wenn die empfangene Auslastungsstatusantwort-Signalisierung weiter eine Wartedauer umfasst, und wenn der Auslastungsfaktor anzeigt, dass sich das aktuelle Netzwerk im Überlastungszustand befindet, und die Wartedauer länger als die aktuelle Gültigkeitsdauer der Trigger-Nachricht ist; die MTC IWF (61) dazu eingerichtet ist, die Trigger-Nachricht an die Mobilitätsverwaltungseinheit (62) zu senden, nachdem die Wartedauer verstrichen ist, wenn der Auslastungsfaktor anzeigt, dass sich das aktuelle Netzwerk im Überlastungszustand befindet und die Wartedauer kürzer als die aktuelle Gültigkeitsdauer der Trigger-Nachricht ist; die MTC IWF (61) dazu eingerichtet ist, die Trigger-Nachricht an die Mobilitätsverwaltungseinheit (62) zu senden, wenn der Auslastungsfaktor anzeigt, dass sich das aktuelle Netzwerk nicht im Überlastungszustand befindet.

## Revendications

1. Procédé pour envoyer un message de déclenchement comprenant :
après la réception d'un message de déclenchement, l'envoi (201) par une fonction d'interfonctionnement de communication de type de machine, MTC IWF, d'une signalisation de demande d'état de charge à une unité de gestion de mobilité ;
après la réception de la signalisation de demande d'état de charge, le renvoi (202) par l'unité de gestion de mobilité d'une signalisation de réponse d'état de charge à la MTC IWF ; et
la détermination (203) par la MTC IWF de l'envoi du message de déclenchement en fonction de la signalisation de réponse d'état de charge renvoyée par l'unité de gestion de mobilité ;
dans lequel, quand la signalisation de réponse d'état de charge comprend un facteur de charge, la détermination (203) par la MTC IWF de l'envoi du message de déclenchement en fonction de la signalisation de réponse d'état de charge renvoyée par l'unité de gestion de mobilité comprend :
quand le facteur de charge indique qu'un réseau actuel est dans un état de congestion, l'envoi (306, 504) par la MTC IWF du message de déclenchement à un terminal par un mode de déclenchement de message court ou une diffusion cellulaire.

2. Procédé selon la revendication 1, **caractérisé en ce qu'**il comprend en outre :
l'envoi (501) par un serveur d'application de MTC du message de déclenchement à la MTC IWF, dans lequel le message de déclenchement comprend une identité de terminal et un temps de validité ; et
la sauvegarde par la MTC IWF du message de déclenchement, le réglage et le démarrage d'un temporisateur en fonction du temps de validité.

3. Procédé selon la revendication 1, **caractérisé en ce que** l'envoi (201) par la MTC IWF de la signalisation de demande d'état de charge à l'unité de gestion de mobilité comprend :
l'envoi direct (502) par la MTC IWF de la signalisation de demande d'état de charge à l'unité de gestion de mobilité ; ou
l'envoi (302, 303, 402, 403) par la MTC IWF de la signalisation de demande d'état de charge à l'unité de gestion de mobilité par le biais d'un serveur d'abonné d'origine, HSS, ou d'un registre de localisation d'origine, HLR.

4. Procédé selon l'une quelconque des revendications 1 à 3, **caractérisé en ce que** la détermination par la MTC IWF (203) de l'envoi du message de déclenchement en fonction de la signalisation de réponse d'état de charge renvoyée par l'unité de gestion de mobilité comprend en outre :
quand le facteur de charge indique que le réseau actuel n'est pas dans l'état de congestion, l'envoi (306, 504) par la MTC IWF du message de déclenchement à l'unité de gestion de mobilité.

5. Procédé selon l'une quelconque des revendications 1 à 3, **caractérisé en ce que**, quand la signalisation de réponse d'état de charge comprend en outre un temps d'attente, la détermination (203) par la MTC IWF de l'envoi du message de déclenchement en fonction de la signalisation de réponse d'état de charge renvoyée par l'unité de gestion de mobilité comprend :
quand le facteur de charge indique que le réseau actuel est dans l'état de congestion et le temps d'attente est supérieur au temps de validité actuel du message de déclenchement, l'envoi (406) par la MTC IWF du message de déclenchement au terminal par le mode du déclenchement de message court ou de la diffusion cellulaire ; ou
quand le facteur de charge indique que le réseau actuel est dans l'état de congestion et le temps d'attente est inférieur au temps de validité actuel du message de déclenchement, l'envoi (406) par la MTC IWF du message de déclenchement à l'unité de gestion de mobilité après que le temps d'attente est écoulé ; ou
quand le facteur de charge indique que le réseau actuel n'est pas dans l'état de congestion, l'envoi (406) par la MTC IWF du message de déclenchement à l'unité de gestion de mobilité.

6. Système pour envoyer un message de déclenchement, où le système comprend une fonction d'interfonctionnement de communication de type de machine, MTC IWF, (61) et une unité de gestion de mobilité (62), dans lequel
la MTC IWF (61) est configurée pour envoyer une signalisation de demande d'état de charge à l'unité de gestion de mobilité (62) après la réception d'un message de déclenchement et déterminer l'envoi du message de déclenchement en fonction de la signalisation de réponse d'état de charge renvoyée par l'unité de gestion de mobilité (62) ; et
l'unité de gestion de mobilité (62) est configurée pour renvoyer la signalisation de réponse d'état de charge en fonction de la signalisation de demande d'état de charge qui est reçue ;
dans lequel la MTC IWF (61) est configurée pour envoyer le message de déclenchement par un mode de déclenchement de message court ou une diffusion cellulaire, quand la signalisation de réponse d'état de charge reçue comprend un facteur de charge et le facteur de charge indique qu'un réseau actuel est dans un état de congestion.

7. Système selon la revendication 6, **caractérisé en ce qu'**il comprend en outre : un serveur d'application de MTC (63), configuré pour envoyer le message de déclenchement à la MTC IWF (61), dans lequel le message de déclenchement comprend une identité de terminal et un temps de validité ; et
la MTC IWF (61) est configurée en outre pour sauvegarder le message de déclenchement, régler et démarrer un temporisateur en fonction du temps de validité dans le message de déclenchement.

8. Système selon la revendication 6, **caractérisé en ce que** le système comprend en outre un serveur d'abonné d'origine, HSS, ou un registre de localisation d'origine, HLR (64) ;
la MTC IWF (61) est configurée pour envoyer directement la signalisation de demande d'état de charge à l'unité de gestion de mobilité (62), ou envoyer la signalisation de demande d'état de charge à l'unité de gestion de mobilité (62) par le biais du HSS ou du HLR (64).

9. Système selon l'une quelconque des revendications 6 à 8, **caractérisé en ce que** la MTC IWF (61) est configurée en outre pour envoyer le message de déclenchement à l'unité de gestion de mobilité (62) quand le facteur de charge indique que le réseau actuel n'est pas dans l'état de congestion.

10. Système selon l'une quelconque des revendications 6 à 8, **caractérisé en ce que** la MTC IWF (61) est configurée pour envoyer le message de déclenchement à un terminal par le mode du déclenchement de message court ou de la diffusion cellulaire, quand la signalisation de réponse d'état de charge reçue comprend en outre un temps d'attente, et quand le facteur de charge indique que le réseau actuel est dans l'état de congestion et le temps d'attente est supérieur au temps de validité actuel du message de déclenchement ; la MTC IWF (61) est configurée pour envoyer le message de déclenchement à l'unité de gestion de mobilité (62) après que le temps d'attente est écoulé, quand le facteur de charge indique que le réseau actuel est dans l'état de congestion et le temps d'attente est inférieur au temps de validité actuel du message de déclenchement ; la MTC IWF (61) est configurée pour envoyer le message de déclenchement à l'unité de gestion de mobilité (62) quand le facteur de charge indique que le réseau actuel n'est pas dans l'état de congestion.
